# EUROPEAN PATENT APPLICATION

(11) **EP 4 797 611 A1**
(43) Date of publication of application: **26.08.2026**
(21) Application number: 24890065.6
(22) Date of filing: 07.06.2024
(51) Int. Cl.: H04L 9/32

(54) **ZERO-KNOWLEDGE PROOF GENERATION METHOD AND APPARATUS, AND DEVICE AND STORAGE MEDIUM**

(30) Priority: 17.11.2023 CN 202311554136; 29.03.2024 CN 202410381649
(71) Applicant: Huawei Cloud Computing Technologies Co., Ltd., Gui'an New District, Guizhou 550025 (CN)
(72) Inventor: XUE, Tengfei, Guiyang, Guizhou 550025 (CN); SHI, Ziliang, Guiyang, Guizhou 550025 (CN); DU, Tianlin, Guiyang, Guizhou 550025 (CN); ZHOU, Wenli, Guiyang, Guizhou 550025 (CN)
(74) Representative: Isarpatent
(86) International application number: PCT/CN2024/098021
(87) International publication number: WO 2025/102696

(57) **Abstract**

A zero-knowledge proof generation method and apparatus, a device, and a storage medium are disclosed, and belong to the field of data security. The method is applied to a management platform, the management platform is configured to manage an infrastructure, the infrastructure includes a plurality of compute resources, and each compute resource is used for generating ZKPs corresponding to a plurality of types of proof protocols. The method includes: receiving a proof generation request, where the proof generation request includes proof protocol information and a circuit file, the proof protocol information indicates a target proof protocol used for generating a target ZKP, the target proof protocol is one of the plurality of types of proof protocols, and the circuit file indicates a computing model for generating the target ZKP; determining a target compute resource in the plurality of compute resources based on the proof generation request; and generating the target ZKP by using the target compute resource. The method can support ZKP generation by using different types of ZKP protocols.

## Description

This application claims priorities to Chinese Patent Application No. 202311554136.2, filed on November 17, 2023 and entitled "ZERO-KNOWLEDGE PROOF GENERATION METHOD AND APPARATUS, DEVICE, AND STORAGE MEDIUM", and to Chinese Patent Application No. 202410381649.6, filed on March 29, 2024 and entitled "ZERO-KNOWLEDGE PROOF GENERATION METHOD AND APPARATUS, DEVICE, AND STORAGE MEDIUM", both of which are incorporated herein by reference in their entireties.

### TECHNICAL FIELD

This application relates to the field of communication technologies, and in particular, to a network performance measurement method and apparatus, a device, a system, and a storage medium. This application relates to the field of data security, and in particular, to a zero-knowledge proof (zero-knowledge proof, ZKP) generation method and apparatus, a device, and a storage medium.

### BACKGROUND

A ZKP is a cryptographic protocol that allows a prover to prove, without disclosing any additional information other than a specific statement, to a verifier that the statement is correct. In a plurality of scenarios such as a blockchain, distributed storage, and privacy protection, ZKP generation is required.

In a related technology, a ZKP may be generated in an online (online) integrated development environment (integrated development environment, IDE) or by an online proof (online proof) generation tool. A ZKP generation method includes: A user first selects a type of a ZKP protocol on a user interface of the IDE or the online proof generation tool, and then edits a circuit online or uploads a circuit file. The IDE or the online proof generation tool generates the ZKP based on a circuit or the circuit file.

However, different types of ZKP protocols and different scenarios have different resource requirements. When the IDE or the online proof generation tool supports a plurality of types of ZKP protocols, resources corresponding to different ZKP protocols are independent of each other. In this case, resources may be insufficient or a large quantity of resources may be idle, which results in low resource utilization.

### SUMMARY

This application provides a ZKP generation method and apparatus, a device, and a storage medium. In a ZKP generation process, a plurality of types of proof protocols share a resource, so that resource utilization can be improved.

According to a first aspect, a ZKP generation method is provided. The method is applied to a management platform for managing an infrastructure. The infrastructure includes a plurality of compute resources, and each of the plurality of compute resources is used for generating zero-knowledge proofs corresponding to a plurality of types of proof protocols. The method includes: receiving a proof generation request, where the proof generation request includes proof protocol information and a circuit file, the proof protocol information indicates a target proof protocol used for generating a target zero-knowledge proof, the target proof protocol is one of the plurality of protocol types, and the circuit file indicates a computing model for generating the target zero-knowledge proof; determining a target compute resource in the plurality of compute resources based on the proof generation request; and generating the target zero-knowledge proof by using the target compute resource.

In this application, the plurality of types of proof protocols share the infrastructure. The management platform performs resource allocation based on the proof generation request, that is, determines the target compute resource in the plurality of compute resources included in the infrastructure, and generates the target ZKP by using the target compute resource, so that resource utilization can be effectively improved.

Optionally, the proof generation request further includes a configuration parameter, and determining the target compute resource in the plurality of compute resources based on the proof generation request includes: generating, based on the circuit file and the configuration parameter, a constraint system corresponding to the target proof protocol; and determining the target compute resource in the plurality of compute resources based on the target proof protocol and characteristic information of the constraint system, where the characteristic information of the constraint system includes at least one of the following information: a scale of the constraint system, a bit width of an elliptic curve, a hash function type, and a polynomial commitment type. Herein, the characteristic information of the constraint system is information that has large impact on an overall computation amount of a target compute task.

Different types of ZKP protocols may support different types of constraint systems, and the different types of constraint systems need different computation amounts in a ZKP generation process. Therefore, the constraint system corresponding to the type indicated by the proof protocol information needs to be first generated, and then a compute resource is allocated to the target compute task from a compute resource pool based on the target proof protocol and the characteristic information of the constraint system.

Optionally, determining the target compute resource in the plurality of compute resources based on the target proof protocol and the characteristic information of the constraint system includes: determining task complexity based on the target proof protocol and the characteristic information of the constraint system; and determining the target compute resource in the plurality of compute resources based on the task complexity. The task complexity is used for measuring a complexity degree of a compute task in the ZKP generation process. Generally, higher task complexity indicates more needed compute resources, and lower task complexity indicates fewer needed compute resources. The characteristic information of the constraint system greatly affects the overall computation amount of the target compute task. Therefore, the foregoing information can be used for measuring the task complexity of the target compute task.

Optionally, the task complexity of the target compute task may be further determined based on other reference information in addition to the characteristic information that is of the constraint system and that has the large impact on the computation amount. Correspondingly, the method further includes: obtaining the reference information. The reference information includes at least one of a user level, a concurrent processing quantity, a size of a generated proof, and expected response time for proof generation, the user level indicates a level of an initiator of the proof generation request, and the concurrent processing quantity indicates a quantity of other proof generation requests that coexist with the proof generation request. The reference information may also affect a computation amount per unit time. Therefore, the reference information may also be used for determining the task complexity.

Optionally, each compute resource includes one worker thread, and each worker thread is used for running one type of operator. The target proof protocol is associated with at least one type of operator. For the worker thread, the following allocation manner may be used: determining, in the plurality of compute resources based on the task complexity, a target quantity of worker threads for each type of operator associated with the target proof protocol, where the target quantity is positively correlated with the task complexity. Higher task complexity indicates a larger quantity of operator operations that need to be performed. Therefore, a corresponding target quantity is also larger, so that a requirement of the target compute task is met.

In some examples, each worker thread runs in one processor core, and each processor core runs only one worker thread. That is, each processor core is used for running one type of operator. In some other examples, each processor core runs a plurality of worker threads. That is, each processor core is used for running one or more types of operators.

Optionally, the infrastructure further includes a plurality of storage resources, and the method further includes: determining a target storage resource in the plurality of storage resources based on at least one of the scale of the constraint system, a size of a lookup table used in a polynomial commitment solution, the bit width of the elliptic curve, and an operator computing algorithm.

In a process of executing the target compute task, a large amount of data is generated and needs to be stored. The foregoing information is closely related to the amount of data that needs to be stored in the process of executing the compute task. Therefore, the target storage resource can be determined based on the foregoing information, to store the data.

Optionally, the proof generation request further includes a first-type parameter, and the first-type parameter is used for converting the circuit file into a quadratic arithmetic program QAP. The method further includes: validating the circuit file and/or the first-type parameter based on the proof protocol information. After the proof generation request is received, at least a part of content in the proof generation request is first validated based on the proof protocol information, to ensure normal execution of a subsequent ZKP generation process.

Optionally, the proof generation request further includes mode information, and the mode information indicates that a mode of the target ZKP is a recursive mode. Generating the ZKP by using the target compute resource includes: obtaining a historical ZKP; and generating the target ZKP based on the historical ZKP by using the target compute resource. When the mode of the target ZKP is the recursive mode, the historical ZKP needs to be obtained first, and then the target ZKP is generated based on the historical ZKP. In other words, this application can support both a ZKP in non-recursive mode and a ZKP in recursive mode.

Optionally, the proof generation request further includes proof index information of the historical ZKP. Obtaining the historical ZKP includes: obtaining the historical ZKP from a cloud server based on the proof index information. The historical ZKP is stored in the cloud server. When needed, the historical ZKP is obtained based on the proof index information to perform recursive proving.

According to a second aspect, a ZKP generation apparatus is provided. The ZKP generation apparatus has a function of implementing the method according to any one of the first aspect or the implementations of the first aspect. The function may be implemented by hardware, or may be implemented by hardware executing corresponding software. The hardware or the software includes one or more modules corresponding to the foregoing function.

According to a third aspect, a compute device cluster is provided. The compute device cluster includes at least one compute device, each compute device includes a processor and a storage. The processor of the at least one compute device is configured to execute instructions stored in the storage of the at least one compute device, to enable the compute device cluster to perform the method in the first aspect.

Optionally, there are one or more processors, the processor is a multi-core processor, and there are one or more storages.

Optionally, the storage may be integrated with the processor, or the storage and the processor are separately disposed.

During specific implementation, the storage may be a non-transitory (non-transitory) storage, for example, a read-only memory (read-only memory, ROM). The storage and the processor may be integrated on a same chip, or may be separately disposed on different chips. A type of the storage and a manner of disposing the storage and the processor are not limited in this application.

According to a fourth aspect, a computer-readable storage medium is provided. The storage medium stores at least one instruction, and the instruction is loaded and executed by a compute device cluster, to enable the compute device cluster to implement the method in the first aspect.

According to a fifth aspect, a computer program (product) is provided. The computer program (product) includes computer program code, and when the computer program code is run by a compute device cluster, the compute device cluster performs the method in the first aspect.

### BRIEF DESCRIPTION OF DRAWINGS

FIG. 1 is a diagram of an application scenario according to an embodiment of this application;
FIG. 2 is a schematic flowchart of a ZKP generation method according to an embodiment of this application;
FIG. 3 is a diagram of a component architecture of a ZKP generation apparatus according to an embodiment of this application;
FIG. 4 is a diagram of a detailed process of a ZKP generation method according to an embodiment of this application;
FIG. 5 is a diagram of a structure of a ZKP generation apparatus according to an embodiment of this application;
FIG. 6 is a diagram of a structure of a compute device according to an embodiment of this application;
FIG. 7 is a diagram of a structure of a compute device cluster according to an embodiment of this application; and
FIG. 8 is a diagram of a structure of a compute device cluster according to an embodiment of this application.

### DESCRIPTION OF EMBODIMENTS

To make the objectives, technical solutions, and advantages of this application clearer, the following further describes the implementations of this application in detail with reference to accompanying drawings.

A ZKP has three characteristics: completeness (Completeness), soundness (Soundness), and zero-knowledge (Zero-knowledge).

The ZKP is widely used, including but not limited to the following application:
- Blockchain system: A ZKP-based rollup solution can effectively improve a throughput and performance of an entire Ethereum system while ensuring decentralization and security. Ethereum is a de facto standard for basic settings at a bottom layer of a decentralized internet (web3) running on a blockchain technology, and is a public blockchain with a largest quantity of users, developers, and projects. Ethereum is constrained by an impossible triangle (scalability, security, and decentralization) of the blockchain system, resulting in an extremely low throughput and extremely low performance.
- Distributed storage: The ZKP can prove, without disclosing file content, that a file is correctly stored.
- Privacy protection: The ZKP can complete identity authentication on a premise of protecting sensitive information.
- Security: The ZKP can prove, without disclosing a specific secret (for example, a key), that the secret is held.
- Artificial intelligence (artificial intelligence, AI): The ZKP can keep an AI model training process confidential, and prove that a model reaches specific precision.

In a related technology, when a ZKP is generated, resources that can be used for different types of ZKP protocols are pre-allocated and are independent of each other, and a problem of low resource utilization may exist. Therefore, this application provides a ZKP generation method supporting a plurality of protocols.

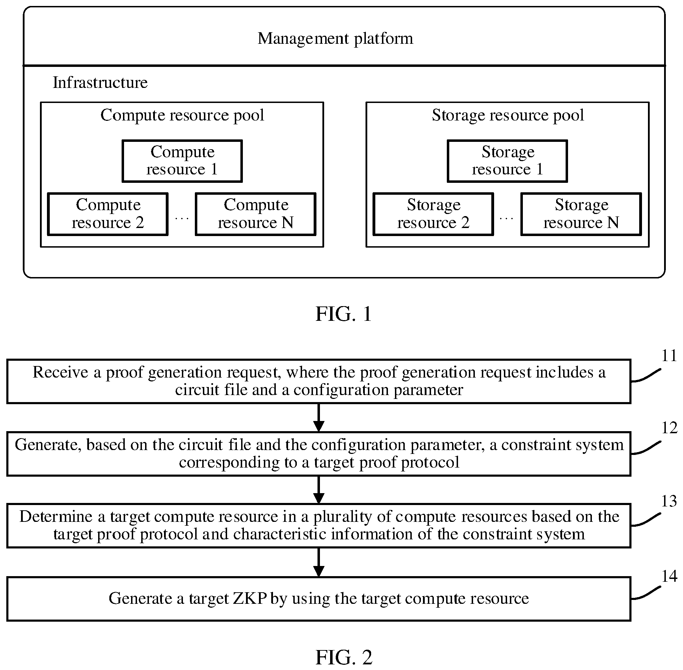

FIG. 1 is a diagram of an application scenario of a ZKP generation method according to an embodiment of this application. As shown in FIG. 1, a management platform is configured to manage an infrastructure.

The infrastructure includes a plurality of compute resources, and the plurality of compute resources may form a compute resource pool. Each compute resource is used for generating ZKPs corresponding to a plurality of types of proof protocols, in other words, is shared by the plurality of types of proof protocols. Herein, sharing means that there is no fixed binding relationship between the compute resource in the compute resource pool and a type of a ZKP protocol. For example, a specific compute resource may be used for generating, in one time period, a ZKP corresponding to a first ZKP protocol, and may be used for generating, in another time period, a ZKP corresponding to another ZKP protocol. The management platform may flexibly schedule compute resources to generate ZKPs of different proof protocols.

Optionally, the compute resource includes one or more of a processor core, a thread running in the processor core, or a virtual machine.

Optionally, the plurality of types of proof protocols may be selected from the following protocol types: halo2, groth16, plonk, STARK, supernova, and the like.

Optionally, the infrastructure further includes a plurality of storage resources, and the plurality of storage resources may form a storage resource pool. Each storage resource is used for storing, in a ZKP generation process, various types of data generated in an operation process. The storage resource may be storage space of a storage like a memory.

FIG. 2 is a flowchart of a ZKP generation method according to an embodiment of this application. As shown in FIG. 2, the ZKP generation method includes the following steps.

11: Receive a proof generation request.

The proof generation request includes proof protocol information, the proof protocol information indicates a target proof protocol used for generating a target ZKP, and the target proof protocol is one of the foregoing plurality of protocol types.

Optionally, the proof protocol information may be a number corresponding to a type of a ZKP protocol. Different types of ZKP protocols correspond to different numbers. For example, numbers corresponding to four types, namely, halo2, groth16, plonk, and supernova are respectively: 1, 2, 3, and 4. It should be noted that a quantity of protocol types and a relationship between a protocol type and a number are merely examples, and may be set based on an actual requirement. The proof protocol information may alternatively be another identity, provided that the corresponding ZKP protocol can be uniquely indicated.

The proof generation request further includes a circuit file. The circuit file indicates a computing model for generating the target ZKP.

The circuit file is used for describing a circuit, and the circuit file includes Turing complete service descriptions, so that any service logic can be implemented. In embodiments of this application, the circuit is a logic program including an input, a circuit gate (also referred to as a logic gate), and an output, and is used for describing and encode a compute task. Optionally, the circuit file may be a JS object notation (JavaScript object notation, JSON) file or the like.

Optionally, the proof generation request further includes a configuration parameter. The configuration parameter includes at least a first-type parameter, and the first-type parameter is used for performing quadratic arithmetic program (quadratic arithmetic program, QAP) conversion on a constraint system. For example, the first-type parameter includes at least one of an elliptic curve type, a hash function type, and a polynomial commitment type. Optionally, the elliptic curve type includes but is not limited to a BN (Barreto-Naehrig) 254 curve, a BN-381 curve, a BN-512 curve, and a BLS (Barreto-Lynn-Scott) 12-381 curve. The hash function type includes but is not limited to Poseidon (Poseidon), minimal multiplicative complexity (Minimal Multiplicative Complexity, MiMC), Neptune (Neptune), secure hash algorithm (secure hash algorithm, SHA) 384, and SHA256. The polynomial commitment type includes but is not limited to IPA (based on a discrete log group (discrete log group)), FRI (based on a hash function (hash function)), KZG (based on a pairing group (pairing group)), and DARKS (based on an unknown order group).

Content of the first-type parameter is related to a protocol type. Different types of first-type parameters need to be set for different protocol types. For example, a polynomial commitment type corresponding to a zksTARKs protocol is FRI, a polynomial commitment type corresponding to a plonk protocol is KZG, a polynomial commitment type corresponding to a halo2 protocol is IPA, and a polynomial commitment type corresponding to a supersonic protocol is DARK.

Optionally, the configuration parameter further includes a second-type parameter, the second-type parameter includes mode information, and the mode information indicates a ZKP mode. The ZKP mode includes a recursive mode and a non-recursive mode.

Optionally, the second-type parameter further includes proof index information of a historical ZKP, and the proof index information of the historical ZKP indicates a historical ZKP needed for a recursive ZKP. In some examples, when the mode information indicates that the ZKP mode is the recursive mode, the second-type parameter further includes the proof index information of the historical ZKP. When the mode information indicates that the ZKP mode is the non-recursive mode, the second-type parameter does not include the proof index information of the historical ZKP. For example, the proof index information of the historical ZKP includes an identity (identity, ID) of the historical ZKP. The proof index information of the historical ZKP is generated when the historical ZKP is generated, and may uniquely indicate an existing ZKP.

Optionally, the second-type parameter further includes at least one of the following information: a user level, a size of a generated proof, and expected response time for proof generation. The user level indicates a level of an initiator of the proof generation request. The user level, the size of the generated proof, and the expected response time for proof generation are related to a user requirement.

Optionally, the proof protocol information, the circuit file, and the configuration parameter are sent by a user. The user may be any component and/or role that has a computing requirement for a ZKP, including but not limited to a ZK virtual machine (zero-knowledge virtual machine, ZK VM) and a ZK prover (ZK prover).

Optionally, the user may send the proof generation request by invoking a protocol request interface. Correspondingly, a cloud server receives the proof generation request through the protocol request interface. The protocol request interface is an application programming interface (application programming interface, API). The protocol request interface is invoked to send the proof protocol information and task information, and implementation is convenient.

For example, the protocol request interface is as follows:

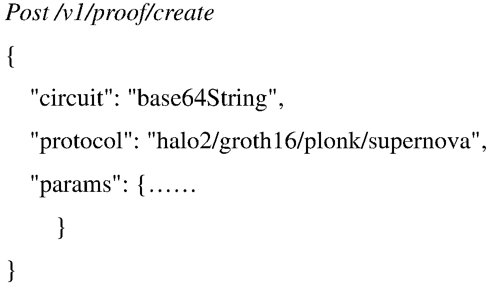

"circuit" indicates the circuit file, "params" indicates the configuration parameter, and "protocol" indicates the proof protocol information. "circuit": "base64String" indicates that the circuit file is encoded into a base64 character string. "protocol": "halo2/groth16/plonk/supernova" indicates a protocol type, and indicates that a plurality of types of protocols such as halo2, groth16, plonk, and supernova are supported.

In this example, transmission of content of the proof generation request may be simultaneously performed by invoking the protocol request interface once. In another example, the user may perform transmission of content of the proof generation request by invoking the protocol interface a plurality of times.

In a possible implementation, the user purchases the cloud server, and deploys software on the cloud server to form a service. The user who purchases the cloud server can generate a ZKP by invoking the service through the API.

In another possible implementation, the user generates a ZKP in a serverless (serverless) API manner. In the serverless manner, the user may purchase a quantity of API interface invocations as needed without purchasing a server.

12: Generate, based on the circuit file and the configuration parameter, a constraint system corresponding to the target proof protocol.

Optionally, the constraint system may be a rank-1 constraint system (rank-1 constraint system, R1CS) or a constraint system of a plonkish type or the like. The corresponding constraint system may be obtained by compiling the circuit file.

For an RICS, each variable is of a rank 1. Variables of the R1CS may be classified into two types: a public variable (public input), and a non-public variable or an auxiliary variable (aux input). Therefore, a total quantity of variables of the R1CS is a sum of a quantity of public variables and a quantity of non-public variables. Depending on a logic circuit, each variable may have different values, which are referred to as constraints. In other words, variables and constraints (values) are two determinants for constructing the RICS.

Each type of ZKP protocol may support one or more types of constraint systems. For example, the groth16 protocol supports the R1CS. For another example, the halo2 protocol may support plonkish or the R1CS. plonkish is more abundant in expression and has higher constraint efficiency. Therefore, the halo2 protocol mainly supports plonkish in practice, but selection may be performed based on an actual requirement.

In a possible implementation, when the target proof protocol supports a plurality of types of constraint systems, a type of the constraint system corresponding to the target proof protocol is determined based on a preconfigured correspondence between a ZKP type and a type of a constraint system. In the correspondence, each type of proof protocol corresponds to one type of a constraint system; and then the constraint system of the corresponding type is generated. In another possible implementation, a type of the constraint system may be specified in the foregoing configuration parameter.

Optionally, before step 12, the method may further include: validating at least one of the circuit file and the first-type parameter based on the target proof protocol; and after the validation is completed, generating, based on the circuit file and the first-type parameter, the constraint system corresponding to the target proof protocol.

In some examples, a correspondence between each protocol type and a circuit format verification rule may be prestored. A corresponding target circuit format verification rule is determined based on the correspondence and the target proof protocol, and then a circuit format is verified according to the target circuit format verification rule. Each type of proof protocol supports one or more types of circuit formats. Circuit formats corresponding to different types of proof protocols may be completely different, partially the same, or completely the same. For example, a proof protocol A corresponds to a circuit format 1. A proof protocol B corresponds to two types of circuit formats: the circuit format 1 and a circuit format 2. A proof protocol C corresponds to a circuit format 3. A proof protocol D corresponds to two types of circuit formats: the circuit format 1 and the circuit format 2. It can be learned that, circuit formats corresponding to the proof protocol A and the proof protocol B are partially the same, circuit formats corresponding to the proof protocol A and the proof protocol C are completely different, and circuit formats corresponding to the proof protocol B and the proof protocol D are completely the same. The circuit format verification rule may be extracted based on a circuit format supported by a type of a ZKP protocol. Content of the verification rule is not limited in this embodiment of this disclosure.

In some other examples, the circuit file may be compiled by using a compiler. If the circuit file can be correctly compiled, it indicates that a circuit format is correct. If the circuit file cannot be correctly compiled, it indicates that a circuit format is incorrect.

Parameter formats of first-type parameters corresponding to different types of proof protocols are different. Herein, the parameter format includes a parameter quantity, a parameter type, and the like. If a parameter quantity or a parameter type of the proof protocol A is different from that of the proof protocol B, it indicates that parameter formats of first-type parameters corresponding to the proof protocol A and the proof protocol B are different. If a parameter quantity and a parameter type of the proof protocol A are the same as those of the proof protocol B, it indicates that parameter formats of first-type parameters corresponding to the proof protocol A and the proof protocol B are the same. For example, the proof protocol A corresponds to two types of first-type parameters: an elliptic curve type 1 and a polynomial commitment type 1. The proof protocol B corresponds to three types of first-type parameters: an elliptic curve type 2, a hash function type 2, and a polynomial commitment type 2. The proof protocol C corresponds to three types of first-type parameters: an elliptic curve type 3, a hash function type 3, and a polynomial commitment type 3. The proof protocol D corresponds to three types of first-type parameters: the elliptic curve type 3, the hash function type 3, and the polynomial commitment type 3. A parameter quantity corresponding to the proof protocol A is different from a parameter quantity corresponding to the proof protocol B. The parameter quantity corresponding to the proof protocol B is the same as a parameter quantity corresponding to the proof protocol C, and parameter types are different. The parameter quantity and parameter types that correspond to the proof protocol C are the same as a parameter quantity and parameter types that correspond to the proof protocol D.

A correspondence between various types of proof protocols and parameter formats may be prestored. A corresponding target parameter format is determined based on the correspondence and the target proof protocol, and then a format of the first-type parameter is validated by using the target parameter format.

13: Determine a target compute resource in a plurality of compute resources based on the target proof protocol and characteristic information of the constraint system.

In some examples, the compute resource includes a processor core. Each processor core is used for performing an operation on one type of operator, and each type of operator corresponds to a plurality of processor cores. In the following, an example in which the processor core is a central processing unit (central processing Unit, CPU) core is used for description.

For example, each of a plurality of CPU cores runs one worker (worker) thread. In other words, each CPU core runs one worker thread, and each worker thread corresponds to one type of operator operation. This plurality of work threads form a worker pool. The worker threads in the worker pool are classified into at least two types of worker threads, and each type of worker threads includes a plurality of worker threads. Each type of worker threads corresponds to one type of operator operation, and different types of worker threads correspond to different types of operator operations. For example, the worker pool includes two types of worker threads: a multiple scalar multiplication (multiple scalar multiplication, MSM) worker thread and a number theoretic transform/inverse number theoretic transform (number theoretic transform/inverse number theoretic transform, NTT/INTT) worker thread. The MSM worker thread is used for performing an MSM operation, and the NTT/INTT worker thread is used for performing an NTT/INTT inverse transform operation. In this embodiment of this application, the worker pool with the MSM operator and the NTT operator is supported, and a compute task of a specified scale can be completed independently of a ZKP algorithm.

It should be noted that the MSM operator and the NTT operator are two types of operator operations needed for a current ZKP protocol. Therefore, in this embodiment of this application, the two types of operators are used as an example for description. If a subsequent ZKP protocol involves another operator operation, a type of a worker thread in the worker pool also increases correspondingly.

In this embodiment, each processor core runs one worker thread. Therefore, a compute resource may be allocated in a form of a processor core, or may be allocated in a form of a work thread. In other words, the compute resource includes the processor core and/or the worker thread. In another embodiment, at least a part of processor cores may run a plurality of worker threads, and each worker thread runs one type of operator. In this case, a compute resource may be allocated in a form of a worker thread. In other words, the compute resource includes the worker thread.

In this embodiment of this application, in addition to the worker pool, a prover (prover) pool is further preconfigured on a management platform. The prover pool includes a plurality of prover threads, each prover thread corresponds to one type of ZKP protocol, and different prover threads correspond to different types of ZKP protocols. Each prover thread is used for scheduling a worker thread for one or more compute tasks related to the corresponding ZKP protocol. In this way, parallel execution of prover threads corresponding to a plurality of types of protocols can be supported. For example, assuming that two compute tasks are received at the same time, and types of ZKP protocols corresponding to the two compute tasks are both the protocol A, a prover thread that supports the protocol A schedules a worker thread, that is, allocates a CPU core, for the two compute tasks.

The prover pool supports extension and update, quick release of a new algorithm library of a community, a new prover thread, and optimization and update of performance of an existing prover thread. In this way, requirements of a plurality of application scenarios can be adapted to. Therefore, the method may further include: updating the prover pool according to operation instructions, where an updating manner includes deleting a prover thread from the prover pool, adding a new prover thread to the prover pool, and the like.

The following separately describes, by using examples, manners of determining the target compute resource and a target storage resource.

### CPU core

In some examples, the following two steps may be used to allocate the CPU core.

Step 1: Determine task complexity of a target compute task based on the characteristic information of the constraint system and the target proof protocol. Step 2: Determine, based on the task complexity, a quantity of CPU cores used for generating the target ZKP. The task complexity is used for measuring a size of a computation amount of the target compute task. Higher task complexity indicates a larger computation amount, and lower task complexity indicates a smaller computation amount. The quantity of CPU cores allocated to the target compute task is positively correlated with the task complexity of the target compute task. In other words, higher task complexity indicates a larger quantity of CPU cores allocated to the target compute task. Lower task complexity indicates a smaller quantity of CPU cores allocated to the target compute task.

Optionally, in step 1, the characteristic information of the constraint system includes at least one of the following information: a scale of the constraint system, a bit width of an elliptic curve, the hash function type, and the polynomial commitment type. The foregoing information greatly affects an overall computation amount of the target compute task. Therefore, the foregoing information is used for measuring the task complexity of the target compute task.

The scale of the constraint system may be represented by using a quantity of circuit gates included in the constraint system. For example, one constraint system includes 2^23 circuit gates. A larger quantity of circuit gates indicates a larger scale of the constraint system, and a smaller quantity of circuit gates indicates a smaller scale of the constraint system. The scale of the constraint system is positively correlated with the task complexity. In other words, a larger scale of the constraint system indicates higher task complexity, and a smaller scale of the constraint system indicates lower task complexity.

The bit width of the elliptic curve corresponds to the elliptic curve type, and a bit width corresponding to each elliptic curve type is fixed. For example, a bit width of BN254 is 254 bits (bits), and a bit width of BLS12-381 is 381 bits. The bit width of the elliptic curve is positively correlated with the task complexity. In other words, a larger bit width of the elliptic curve indicates higher task complexity, and a smaller bit width of the elliptic curve indicates lower task complexity.

After all types of hash functions are converted into circuits, corresponding gate circuit scales are different. For example, different quantities of multiplication gates may be included. A larger quantity of multiplication gates indicates higher computation complexity, that is, higher task complexity. For example, common Poseidon and SHA256 are used as an example. Computation complexity of zero-knowledge proving performed by using Poseidon is lower than computation complexity of that performed by using SHA256.

Computation complexity in a ZKP generation process varies with polynomial commitment types. Higher computation complexity indicates longer time for proof generation. Therefore, a degree of impact of different types of polynomial commitments on computation complexity may be determined by testing time for generating proofs corresponding to different polynomial commitments. For example, time for proof generation by using each of KZG, IPA, and DARK is a constant, and time for proof generation by using FRI increases exponentially with a quantity of polynomial degrees. Therefore, task complexity corresponding to KZG, IPA, and DARK is lower than task complexity corresponding to FRI.

In addition to the characteristic information of the constraint system, the following reference information, for example, the user level, a concurrent processing quantity, the size of the generated proof, and the expected response time for proof generation, may affect a computation amount of the target compute task per unit time. The user level indicates the level of the initiator of the proof generation request. A higher user level indicates that the user has a specific right to preferentially obtain a compute resource, to ensure reliability, stability, and the like of a service. The concurrent processing quantity indicates a quantity of other proof generation requests that coexist with the proof generation request. If the concurrent processing quantity is excessively large, it indicates that a quantity of resources that can be allocated to each user may be limited. A larger size of the proof indicates a higher security level that is of proof generation and that is expected by the user. Shorter expected response time for proof generation indicates that the user expects to obtain the ZKP proof faster. Therefore, the task complexity can also be determined based on the foregoing information.

If the task complexity needs to be computed based on the reference information, the method further includes obtaining the reference information. The user level, the size of the generated proof, and the expected response time for proof generation may be carried in the proof generation request, and the concurrent processing quantity may be obtained by the management platform through statistics collection.

During implementation, a task complexity computing model may be established and stored in advance. The computing model is used for computing the task complexity. An input of the computing model is one or more of the foregoing information, and may be selected based on a requirement.

In some examples, the task complexity is computed based on the following information:
a concurrent processing quantity (in other words, a quantity of users that concurrently perform requesting): N; and
the following parameters of each user:
   a circuit scale constraint: *C*₀*, C*₁*,* ..., and *C*_{*N*-1};
   a ZKP protocol type: *P*₀*, P*₁*, ...,* and *P*_{*N*-1}; and
   a user level: *R*₀*, R*₁*, ...,* and *R*_{*N*-1}, where
   *Fᵢ = f*(*Cᵢ, Pᵢ, Rᵢ*)*, and i* ∈ {0, *N*-1}; and
   *f*(*Cᵢ, Pᵢ, Rᵢ*) is the foregoing computing model.

In some other examples, the task complexity is computed based on the following information:
a concurrent processing quantity (in other words, a quantity of users that concurrently perform requesting): N; and
the following parameters of each user:
   a circuit scale constraint: *C*₀*, C*₁, ..., and *C*_{*N*-1};
   a ZKP protocol type: *P*₀*, P*₁*, P*₂, ...;
   a hash function type: *H*₀*, H*₁*, H*₂*,* ...;
   a polynomial commitment type: *PC*₀*, PC*₁*, PC*₂*, ...;*
   an elliptic curve: *EC*₀*, EC*₁*, EC*₂*, ...;*
   a proof size: *S*₀, *S*₁, *S*₂, ...;
   a user level: *R*₀*, R*₁*,* ..., and *R*_{*N-*1}; and
   a range of expected response time: *T*₀*, T*₁*,* ..., and *T*_{*N-*1}*,* where
   *Fᵢ = f*(*Cᵢ, Pᵢ, Hᵢ, PCᵢ, ECᵢ, Sᵢ, Rᵢ, Tᵢ*)*, and i* ∈ {0, N-11; and
   *f*(*Cᵢ, Pᵢ, Hᵢ, PCᵢ, ECᵢ, Sᵢ, Rᵢ, Tᵢ*) is the foregoing computing model.

Optionally, in step 2, a target quantity of processor cores are determined, in the plurality of compute resources based on the task complexity, for each type of operator associated with the target proof protocol, where the target quantity is positively correlated with the task complexity.

In this embodiment of this application, each type of ZKP protocol is associated with one or more types of operators. In other words, one or more types of operator operations need to be performed in a process of proof generation by using each type of ZKP protocol. An association relationship between various types of proof protocols and operator types may be preset. For example, each of halo2, groth16, and plonk corresponds to two types of operator operations: an MSM operator operation and an NTT/INTT operator operation; and supernova corresponds to one type of operator operation: an NTT/INTT operator operation. Because a quantity of processor cores corresponds to a quantity of worker threads, determining the target quantity of processor cores for each type of determined operator operation is equivalent to allocating a target quantity of worker threads to each type of operator. For a ZKP protocol that needs performing of a plurality of types of operator operations, a total operator operation amount may be first determined based on the task complexity, and then a quantity of CPU cores corresponding to each type of operator is determined based on a proportion of an operation amount of each type of operator operation in the operation amount of all the operator operations. For example, the plonk protocol corresponds to two types of operator operations: the MSM operator operation and the NTT/INTT operator operation. In this case, a total operator operation amount is first determined based on the task complexity, and then a quantity of CPU cores corresponding to each type of operator is determined based on a proportion of an operation amount of each type of operator operation in the operation amount of all the operator operations. Herein, for any protocol type, a proportion of an operation amount of each type of operator operation in an operation amount of all operator operations is preset.

In a possible implementation, concurrent compute tasks may be sorted based on *Fᵢ*, and then compute resources are allocated to the compute tasks based on *Fᵢ*. For example, the compute resources are allocated to the compute tasks in descending order of *Fᵢ*.

It should be noted that, in addition to the task complexity, a compute resource may be further allocated to the target compute task based on factors such as a quantity of idle resources in a compute resource pool.

### Storage resource

The target storage resource is determined based on at least one of the quantity of circuit gates in the constraint system (that is, the scale of the constraint system), a size of a lookup table (lookup table) used in a polynomial commitment solution, the bit width of the elliptic curve, and an operator computing algorithm.

For example, a data amount of computation may be first determined based on at least one of the scale of the constraint system, the size of the lookup table used in the polynomial commitment solution, the bit width of the elliptic curve, and the operator computing algorithm; and then a storage resource of a target size is determined, where the target size is positively correlated with the data amount of computation.

The quantity of circuit gates is positively correlated with a quantity of allocated memories. In other words, a larger quantity of circuit gates indicates a larger size of storage space that needs to be used, and a smaller quantity of circuit gates indicates a larger size of storage space that needs to be used.

The lookup table is a data structure that stores a mapping relationship between an input and an output. In the lookup table, the input and the output respectively correspond to a secret input to be hidden in a zero-knowledge proof and a public input that needs to be proved in the zero-knowledge proof. The input and output can both be of any data type, for example, a number, a string, or another complex object. In the lookup table, each input corresponds to one output. In this way, a corresponding output value can be quickly found based on a specified input value. The mapping relationship between the input and the output may be from pre-computation, a complex function, or the like. Complex computation or function mapping is pre-computed and stored in the lookup table, and is used as a validity proof of a statement in a proof, so that efficiency of proof generation can be improved. A larger size of the lookup table indicates a larger amount of data that needs to be stored. Correspondingly, larger storage space needs to be used. A smaller size of the lookup table indicates a smaller amount of data that needs to be stored. Correspondingly, smaller storage space needs to be used.

A larger bit width of the elliptic curve indicates a larger amount of data that needs to be stored. Correspondingly, larger storage space needs to be used. A smaller bit width of the elliptic curve indicates a smaller amount of data that needs to be stored. Correspondingly, smaller storage space needs to be used.

Different algorithms (that is, computing manners) may be used for computing an operator for each type of operator operation. For a same type of operator, different algorithms are used, and generated intermediate data amounts may be different. Therefore, a size of a storage resource can be determined based on the operator computing algorithm.

In the ZKP generation process, a large amount of data needs to be stored. The foregoing information is closely related to the amount of data that needs to be stored in the ZKP generation process. Therefore, the target storage resource can be determined based on the foregoing information.

Optionally, if the configuration parameter further includes the second-type parameter, and the second-type parameter further includes the proof index information, before 13, the method further includes: obtaining the historical ZKP based on the proof index information. For example, the proof index information indicates a generated historical ZKP, for example, may be an ID of the historical ZKP.

In some examples, the historical ZKP and the corresponding proof index information may be stored in a cloud (for example, in the cloud server). In this case, obtaining the historical ZKP based on the proof index information includes: obtaining the historical ZKP from the cloud.

It can be learned that, according to the method provided in this embodiment of this application, the user can use cloud storage data (for example, a historical proof file and another data file) as an input to generate a zero-knowledge proof, thereby cost-effectively adapting to a service in a web3 distributed storage scenario like an interplanetary file system (interplanetary file system, IPFS).

14: Generate the target ZKP by using the target compute resource.

If the historical ZKP has been obtained based on the proof index information, in step 14, the target ZKP needs to be generated based on the historical ZKP by using the target compute resource. It can be learned that, in this embodiment of this application, the prover thread supports one or more orders of recursive zero-knowledge proof generation, and an intermediate proof (that is, the foregoing historical ZKP) may be stored in a cloud storage and used by using the proof index information.

After the target ZKP is generated, the target ZKP may be returned to the user. When the target ZKP is returned to the user, the proof index information corresponding to the target ZKP may also be returned.

Optionally, if the mode information in the second-type parameter indicates that the ZKP mode is the recursive mode, the method further includes: storing the generated target ZKP and the corresponding index information, for example, storing, in the cloud, the generated target ZKP and the corresponding index information, so that the generated target ZKP and the corresponding index information are invoked in a subsequent ZKP generation process, that is, are used for recursive proving.

In this embodiment of this application, both the generated target ZKP and the historical ZKP may be proof information, and the proof information may be in any form, for example, a number.

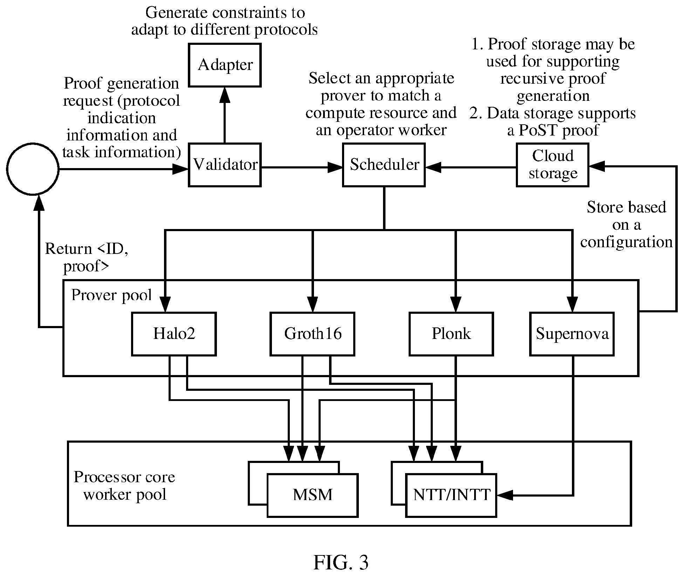

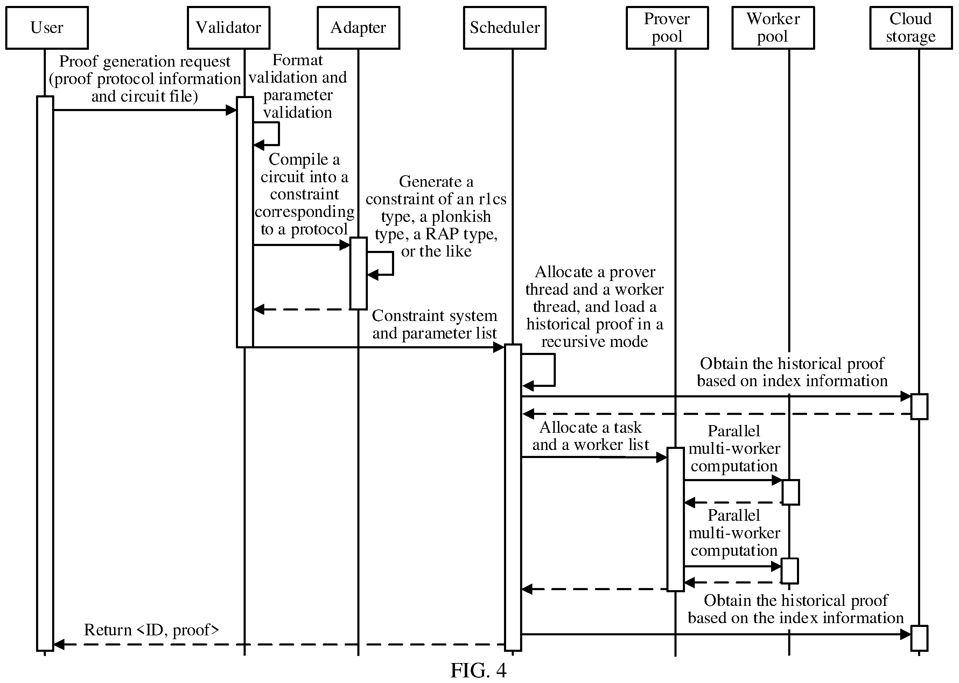

FIG. 3 is a diagram of a component architecture of a proof generation apparatus according to an embodiment of this application. As shown in FIG. 3, the apparatus includes a validator, an adapter, a scheduler, a prover pool, and a worker pool (that is, a multi-core CPU pool). FIG. 4 is a diagram of a detailed process of a proof generation method according to an embodiment of this application. With reference to FIG. 3 and FIG. 4, the validator is configured to validate at least one of the circuit file and the first-type parameter based on the proof protocol information. The adapter is configured to generate the constraint system corresponding to the target proof protocol, that is, perform step 12. In other words, the validator and the adapter are fronted to complete parameter validation, circuit and back-end protocol matching validation, and corresponding adaptation work. The adapter performs different arithmetization and constraint generation on an input circuit based on a protocol type. The scheduler is configured to perform step 13.

It can be learned that, in this embodiment of this application, a plurality of types of protocols and zero-knowledge proofs of a plurality of types of modes are supported based on an API manner, and a service does not need to consider a compute resource. In addition, a worker pool with NTT and MSM operators is implemented based on a multi-core CPU (even a many-core CPU), to shield a protocol change, and support parallel proof generation of a plurality of types of protocols. In addition, in this embodiment of this application, a cloud storage module may be further used to support proof query, proof download, and recursive proof generation, and support an unlimited recursive proving mode. A zero-knowledge proof may be generated based on a plurality of stored proofs, to further compress a size of the proof.

Embodiments of this application are particularly applicable to the following two scenarios:
1. Embodiments of this application may be widely used in a Web3 layer2 zkrollup scenario. Cloud services are provided, in a form of an interface, for components and roles that have a computing requirement for a zero-knowledge proof, for example, a zero-knowledge virtual machine (zkVM) and a zk prover, to implement quick proof generation that adapts to a plurality of types of protocols.
2. Embodiments of this application are applicable to a web3 distributed storage scenario, and helps a project party migrate an internet data center (internet data center, IDC) to the cloud and deploy encapsulation, proof generation, and storage on the cloud. A stored proof is generated based on an interface invoking manner.

Certainly, in addition to the two scenarios, embodiments of this application are further applicable to any scenario in which there is a requirement for computing and accelerated computing of a zero-knowledge proof.

In conclusion, embodiments of this application provide a proof generation method that supports a plurality of protocols. A user may not need to pay attention to a zero-knowledge protocol, and only focuses on a service. When a protocol changes or a more advanced or more efficient protocol is expected to be used, adaptation and switching may be quickly completed. In addition, the user does not need to pay attention to large resource consumption of ZKP computing and a performance problem like slow computing.

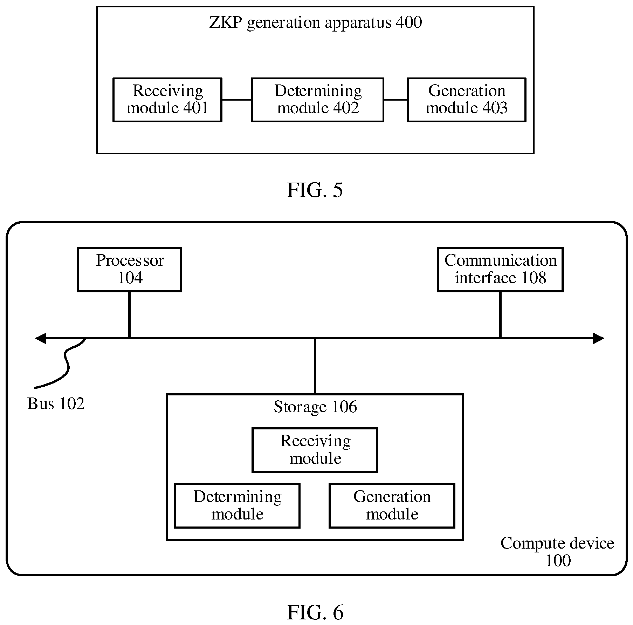

An embodiment of this application further provides a ZKP generation apparatus. FIG. 5 is a diagram of a structure of a ZKP generation apparatus according to an embodiment of this application. The apparatus is used in the foregoing management platform. As shown in FIG. 5, the apparatus 400 includes a receiving module 401, a determining module 402, and a generation module 403. The receiving module 401 is configured to receive a proof generation request, where the proof generation request includes proof protocol information and a circuit file, the proof protocol information indicates a target proof protocol used for generating a target zero-knowledge proof, the target proof protocol is one of a plurality of protocol types, and the circuit file indicates a computing model for generating the target zero-knowledge proof. The determining module 402 is configured to determine a target compute resource in a plurality of compute resources based on the proof generation request. The generation module 403 is configured to generate the target ZKP by using the target compute resource.

Optionally, the determining module 402 includes a system generation submodule and a determining submodule. The system generation submodule is configured to generate, based on the circuit file and a configuration parameter, a constraint system corresponding to the target proof protocol. The determining submodule is configured to determine the target compute resource in the plurality of compute resources based on the target proof protocol and characteristic information of the constraint system, where the characteristic information of the constraint system includes at least one of the following information: a scale of the constraint system, a bit width of an elliptic curve, a hash function type, and a polynomial commitment type.

Optionally, the determining submodule is configured to: determine task complexity based on the target proof protocol and the characteristic information of the constraint system; and determine the target compute resource in the plurality of compute resources based on the task complexity.

Optionally, the apparatus further includes: an obtaining module, configured to obtain reference information, where the reference information includes at least one of a user level, a concurrent processing quantity, a size of a generated proof, and expected response time for proof generation, the user level indicates a level of an initiator of the proof generation request, and the concurrent processing quantity indicates a quantity of other proof generation requests that coexist with the proof generation request. The determining submodule is configured to determine the task complexity based on the target proof protocol, the characteristic information of the constraint system, and the reference information.

Optionally, each compute resource includes one worker thread, the worker thread is used for running one type of operator, and the target proof protocol is associated with at least one type of operator. The determining submodule is configured to determine, in the plurality of compute resources based on the task complexity, a target quantity of worker threads for each type of operator associated with the target proof protocol, where the target quantity is positively correlated with the task complexity.

Optionally, the infrastructure further includes a plurality of storage resources, and the apparatus further includes: a second determining module, configured to determine a target storage resource in the plurality of storage resources based on at least one of the scale of the constraint system, a size of a lookup table used in a polynomial commitment solution, the bit width of the elliptic curve, and an operator computing algorithm.

Optionally, the proof generation request further includes a first-type parameter, and the first-type parameter is used for converting the circuit file into a quadratic arithmetic program QAP. The apparatus further includes: a validation module 404, configured to validate the circuit file and/or the first-type parameter based on the proof protocol information after the proof generation request is received.

Optionally, the task information further includes mode information, and the mode information indicates that a mode of the target ZKP is a recursive mode. The generation module 403 includes: an obtaining submodule, configured to obtain a historical zero-knowledge proof; and a proof generation submodule, configured to generate the target zero-knowledge proof based on the historical zero-knowledge proof by using the compute resource.

The system generation submodule is configured to implement functions of the adapter in FIG. 3 and FIG. 4, the determining submodule is configured to implement functions of the scheduler in FIG. 3 and FIG. 4, and the validation module 404 is configured to implement functions of the validator in FIG. 3 and FIG. 4.

The obtaining module, the determining module, and the generation module may all be implemented by software, or may be implemented by hardware. For example, the following uses the obtaining module as an example to describe an implementation of the obtaining module. Similarly, for implementations of the determining module and the generation module, refer to the implementation of the obtaining module.

A module is used as an example of a software functional unit, and the obtaining module may include code running on a computing instance. The computing instance may include at least one of a physical host (compute device), a virtual machine, and a container. Further, there may be one or more computing instances. For example, the obtaining module may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region or between VPCs in different regions. Interconnection between the VPCs is implemented through the communication gateway.

A module is used as an example of a hardware functional unit, and the obtaining module may include at least one compute device, for example, a server. Alternatively, the obtaining module may be a device implemented by an application-specific integrated circuit (application-specific integrated circuit, ASIC), a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of compute devices included in the obtaining module may be distributed in a same region, or may be distributed in different regions. The plurality of compute devices included in the obtaining module may be distributed in a same AZ, or may be distributed in different AZs. Similarly, the plurality of compute devices included in the obtaining module may be distributed in a same VPC, or may be distributed in a plurality of VPCs. The plurality of compute devices may be any combination of compute devices such as a server, an ASIC, a PLD, a CPLD, an FPGA, and GAL.

It should be noted that, in other embodiments, the obtaining module may be configured to perform any step in the ZKP generation method, the determining module may be configured to perform any step in the ZKP generation method, and the generation module may be configured to perform any step in the ZKP generation method. Steps that the obtaining module, the determining module, and the generation module are responsible for implementing may be specified as needed, and all functions of the ZKP generation apparatus are implemented by separately implementing different steps in the ZKP generation method by the obtaining module, the determining module, and the generation module.

The descriptions of procedures corresponding to the foregoing accompanying drawings have respective focuses. For a part of a specific procedure that is not described in detail, refer to related descriptions of another procedure.

This application further provides a compute device 100. As shown in FIG. 6, the compute device 100 includes a bus 102, a processor 104, a storage 106, and a communication interface 108. The processor 104, the storage 106, and the communication interface 108 communicate with each other through the bus 102. The compute device 100 may be a server or a terminal device. It should be understood that a quantity of processors and a quantity of storages in the compute device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 5. However, this does not mean that there is only one bus or only one type of bus. The bus 102 may include a path for transferring information between the components (for example, the storage 106, the processor 104, and the communication interface 108) of the compute device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The storage 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 106 stores executable program code, and the processor 104 executes the executable program code to separately implement functions of the foregoing obtaining module, determining module, and generation module, so that a ZKP generation method is implemented. In other words, the storage 106 stores instructions used for performing the ZKP generation method.

The communication interface 108 implements communication between the compute device 100 and another device or a communication network by using a transceiver module, for example, but not limited to a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

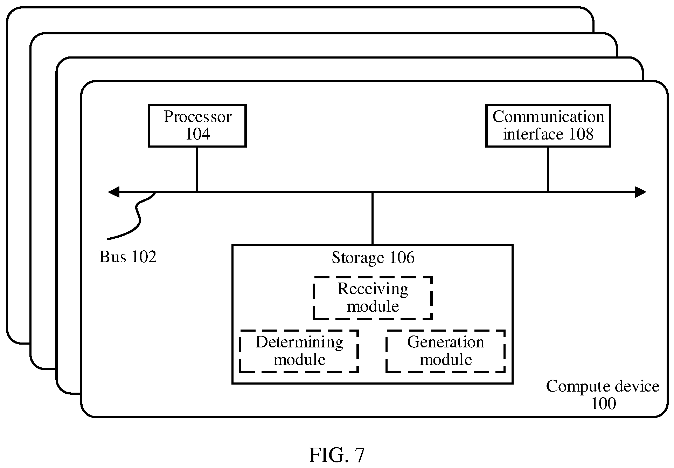

As shown in FIG. 7, the compute device cluster includes at least one compute device 100. A storage 106 of one or more compute devices 100 in the compute device cluster may store same instructions for performing the ZKP generation method.

Alternatively, in some possible implementations, a storage 106 of one or more compute devices 100 in the compute device cluster may separately store some instructions for performing the ZKP generation method. In other words, a combination of the one or more compute devices 100 may jointly execute instructions for performing the ZKP generation method.

It should be noted that storages 106 in different compute devices 100 in the compute device cluster may store different instructions separately used for performing some functions of the ZKP generation apparatus. In other words, instructions stored in storages 106 in different compute devices 100 may implement functions of one or more modules in an obtaining module, a determining module, and a generation module.

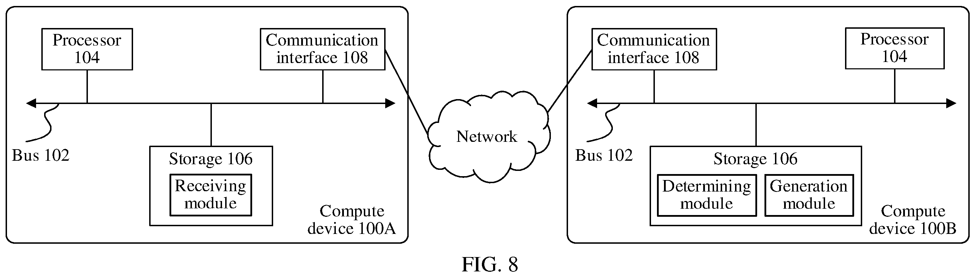

In some possible implementations, the one or more compute devices in the compute device cluster may be connected over a network. The network may be a wide area network, a local area network, or the like. FIG. 8 shows a possible implementation. As shown in FIG. 8, two compute devices 100A and 100B are connected over a network. Specifically, each compute device is connected to the network through a communication interface in the compute device. In such possible implementations, a storage 106 of the compute device 100A stores instructions for performing a function of the obtaining module. In addition, a storage 106 of the compute device 100B stores instructions for performing functions of the determining module and the generation module.

A connection manner in the compute device cluster shown in FIG. 8 may be that, in consideration of that compute resources need to be managed together in the ZKP generation method provided in this application, it is considered that the functions implemented by the determining module and the generation module are performed by the compute device 100B.

It should be understood that functions of the compute device 100A shown in FIG. 8 may alternatively be completed by a plurality of compute devices 100. Similarly, functions of the compute device 100B may alternatively be completed by a plurality of compute devices 100.

An embodiment of this application further provides a computer program product including instructions. The computer program product may be software or a program product that includes instructions and that can run on a compute device or can be stored in any usable medium. When the computer program product runs on at least one compute device, the at least one compute device is enabled to perform the foregoing ZKP generation method.

An embodiment of this application further provides a computer-readable storage medium. The computer-readable storage medium may be any usable medium that can be stored by a compute device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a compute device to perform the foregoing ZKP generation method.

In embodiments of this application, A and/or B indicates that three cases exist: A, B, and A and B.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application.

## Claims

1. A zero-knowledge proof generation method, wherein the method is applied to a management platform, the management platform is configured to manage an infrastructure, the infrastructure comprises a plurality of compute resources, each of the plurality of compute resources is used for generating zero-knowledge proofs corresponding to a plurality of types of proof protocols, and the method comprises:
receiving a proof generation request, wherein the proof generation request comprises proof protocol information and a circuit file, the proof protocol information indicates a target proof protocol used for generating a target zero-knowledge proof, the target proof protocol is one of the plurality of types of proof protocols, and the circuit file indicates a computing model for generating the target zero-knowledge proof;
determining a target compute resource in the plurality of compute resources based on the proof generation request; and
generating the target zero-knowledge proof by using the target compute resource.

2. The method according to claim 1, wherein the proof generation request further comprises a configuration parameter, and determining the target compute resource in the plurality of compute resources based on the proof generation request comprises:
generating, based on the circuit file and the configuration parameter, a constraint system corresponding to the target proof protocol; and
determining the target compute resource in the plurality of compute resources based on the target proof protocol and characteristic information of the constraint system, wherein the characteristic information of the constraint system comprises at least one of the following information: a scale of the constraint system, a bit width of an elliptic curve, a hash function type, and a polynomial commitment type.

3. The method according to claim 2, wherein determining the target compute resource in the plurality of compute resources based on the target proof protocol and the characteristic information of the constraint system comprises:
determining task complexity based on the target proof protocol and the characteristic information of the constraint system; and
determining the target compute resource in the plurality of compute resources based on the task complexity.

4. The method according to claim 3, wherein the method further comprises: obtaining reference information, wherein the reference information comprises at least one of a user level, a concurrent processing quantity, a size of a generated proof, and expected response time for proof generation, the user level indicates a level of an initiator of the proof generation request, and the concurrent processing quantity indicates a quantity of other proof generation requests that coexist with the proof generation request; and
determining the task complexity based on the target proof protocol and the characteristic information of the constraint system comprises:
determining the task complexity based on the target proof protocol, the characteristic information of the constraint system, and the reference information.

5. The method according to claim 3 or 4, wherein each compute resource comprises one worker thread, the worker thread is used for running one type of operator, and the target proof protocol is associated with at least one type of operator; and
determining the target compute resource in the plurality of compute resources based on the task complexity comprises:
determining, in the plurality of compute resources based on the task complexity, a target quantity of worker threads for each type of operator associated with the target proof protocol, wherein the target quantity is positively correlated with the task complexity.

6. The method according to any one of claims 2 to 5, wherein the infrastructure further comprises a plurality of storage resources; and
the method further comprises:
determining a target storage resource in the plurality of storage resources based on at least one of the scale of the constraint system, a size of a lookup table used in a polynomial commitment solution, the bit width of the elliptic curve, and an operator computing algorithm.

7. The method according to any one of claims 1 to 6, wherein the proof generation request further comprises a first-type parameter, and the first-type parameter is used for converting the circuit file into a quadratic arithmetic program QAP; and
after receiving the proof generation request, the method further comprises:
validating the circuit file and/or the first-type parameter based on the proof protocol information.

8. The method according to any one of claims 1 to 7, wherein the proof generation request further comprises mode information, and the mode information indicates that a mode of the target zero-knowledge proof is a recursive mode; and
generating the target zero-knowledge proof by using the target compute resource comprises:
obtaining a historical zero-knowledge proof; and
generating the target zero-knowledge proof based on the historical zero-knowledge proof by using the target compute resource.

9. A zero-knowledge proof generation apparatus, wherein the apparatus is used in a management platform, the management platform is configured to manage an infrastructure, the infrastructure comprises a plurality of compute resources, each of the plurality of compute resources is used for generating zero-knowledge proofs corresponding to a plurality of types of proof protocols, and the apparatus comprises:
a receiving module, configured to receive a proof generation request, wherein the proof generation request comprises proof protocol information and a circuit file, the proof protocol information indicates a target proof protocol used for generating a target zero-knowledge proof, the target proof protocol is one of the plurality of types of proof protocols, and the circuit file indicates a computing model for generating the target zero-knowledge proof;
a determining module, configured to determine a target compute resource in the plurality of compute resources based on the proof generation request; and
a generation module, configured to generate the target zero-knowledge proof by using the target compute resource.

10. The apparatus according to claim 9, wherein the proof generation request further comprises a configuration parameter, and the determining module comprises:
a system generation submodule, configured to generate, based on the circuit file and the configuration parameter, a constraint system corresponding to the target proof protocol; and
a determining submodule, configured to determine the target compute resource in the plurality of compute resources based on the target proof protocol and characteristic information of the constraint system, wherein the characteristic information of the constraint system comprises at least one of the following information: a scale of the constraint system, a bit width of an elliptic curve, a hash function type, and a polynomial commitment type.

11. The apparatus according to claim 10, wherein the determining submodule is configured to: determine task complexity based on the target proof protocol and the characteristic information of the constraint system; and determine the target compute resource in the plurality of compute resources based on the task complexity.

12. The apparatus according to claim 11, wherein the apparatus further comprises:
an obtaining module, configured to obtain reference information, wherein the reference information comprises at least one of a user level, a concurrent processing quantity, a size of a generated proof, and expected response time for proof generation, the user level indicates a level of an initiator of the proof generation request, and the concurrent processing quantity indicates a quantity of other proof generation requests that coexist with the proof generation request; and
the determining submodule is configured to determine the task complexity based on the target proof protocol, the characteristic information of the constraint system, and the reference information.

13. The apparatus according to claim 11 or 12, wherein each compute resource comprises one worker thread, the worker thread is used for running one type of operator, and the target proof protocol is associated with at least one type of operator; and
the determining submodule is configured to determine, in the plurality of compute resources based on the task complexity, a target quantity of worker threads for each type of operator associated with the target proof protocol, wherein the target quantity is positively correlated with the task complexity.

14. The apparatus according to any one of claims 10 to 13, wherein the infrastructure further comprises a plurality of storage resources, and the apparatus further comprises: a second determining module, configured to determine a target storage resource in the plurality of storage resources based on at least one of the scale of the constraint system, a size of a lookup table used in a polynomial commitment solution, the bit width of the elliptic curve, and an operator computing algorithm.

15. The apparatus according to any one of claims 9 to 14, wherein the proof generation request further comprises a first-type parameter, and the first-type parameter is used for converting the circuit file into a quadratic arithmetic program QAP; and
the apparatus further comprises: a validation module, configured to validate the circuit file and/or the first-type parameter based on the proof protocol information after the proof generation request is received.

16. The apparatus according to any one of claims 9 to 15, wherein the proof generation request further comprises mode information, and the mode information indicates that a mode of the target zero-knowledge proof is a recursive mode; and
the generation module comprises:
an obtaining submodule, configured to obtain a historical zero-knowledge proof; and
a proof generation submodule, configured to generate the target zero-knowledge proof based on the historical zero-knowledge proof by using the compute resource.

17. A compute device cluster, comprising at least one compute device, wherein each compute device comprises a processor and a storage; and
the processor of the at least one compute device is configured to execute instructions stored in the storage of the at least one compute device, to enable the compute device cluster to perform the zero-knowledge proof generation method according to any one of claims 1 to 8.

18. A computer-readable storage medium, wherein the computer storage medium stores at least one instruction, and the at least one instruction is loaded and executed by a compute device cluster, to enable the compute device cluster to implement the zero-knowledge proof generation method according to any one of claims 1 to 8.

19. A computer program product, wherein the computer program product comprises computer program code, and the computer program code is loaded and executed by a compute device cluster, to enable the compute device cluster to implement the zero-knowledge proof generation method according to any one of claims 1 to 8.
